# EUROPEAN PATENT SPECIFICATION

(11) **EP 2 643 996 B1**
(45) Date of publication and mention of the grant of the patent: **11.01.2017**
(21) Application number: 11790927.5
(22) Date of filing: 21.11.2011
(51) Int. Cl.: H04W 48/20, H04W 48/14, H04W 48/16, H04W 76/02

(54) **AUTOMATIC REMOTE ACCESS TO IEEE 802.11 NETWORKS**
AUTOMATISCHE FERNZUGRIFF AUF IEEE 802.11 NETZWERKE
ACCÈS À DISTANCE AUTOMATIQUE DE RESEAUX IEEE 802.11

(30) Priority: 22.11.2010 US 458245 P
(43) Date of publication of application: 02.10.2013
(73) Proprietor: Anyfi Networks AB, 211 21 Malmö (SE)
(72) Inventor: SMEDMAN, Björn, S-211 50 Malmö (SE); ALMBLADH, Johan, S-222 21 Lund (SE)
(74) Representative: Ström & Gulliksson AB
(86) International application number: PCT/EP2011/070586
(87) International publication number: WO 2012/069425

(56) References cited:
- WO-A1-2007/080490
- WO-A2-02/058336

## Description

### Technical Field

The present invention relates to the general field of data communications networks. Particularly the present invention relates to methods, apparatuses and computer programs for establishing a data connection between a terminal and a data communications network.

### Background

The main technologies for mobile broadband are High Speed Packet Access (HSPA), Long Term Evolution (LTE) and Worldwide Inter-operability for Microwave Access (WiMAX). These technologies are based on the traditional cellular network architecture; base stations (which may be installed e.g. in radio towers) may cover an area of a few square kilometres (a so-called macro cell) and are usually operatively connected to base station controllers and the core network through Synchronous Digital Hierarchy (SDH) or a similar backhaul technology.

Much of the cost of such networks lay in planning the network, installing base stations and providing backhaul. Deals have to be negotiated with property owners and equipment must be purchased, installed and serviced. To improve capacity and reduce cost most mobile broadband technologies also support so-called femtocells. For femtocells a very small base station operatively connected to a base station controller and the core network through the customers' existing broadband Internet connection is installed in a customer home or office.

IEEE 802.11 (Institute of Electrical and Electronics Engineers) compatible technology may also be used to provide service access (e.g. to the Internet) outside of the home or office. A location with IEEE 802.11 compatible access points providing service access to the public is often referred to as a "hotspot" while a larger area, such as a neighbourhood with continuous coverage, is often referred to as a "hot zone". While the IEEE 802.11 standard supports strong authentication and encryption these features are often disabled in a public network to allow potential customers to access information about the network and its services. The most common technical solution, known as the Universal Access Method (UAM), is that the Hyper Text Transfer Protocol (HTTP) requests from an unauthenticated terminal are redirected to a captive portal where users are requested to authenticate themselves using a web browser by entering their user credentials before they are authorized to access the desired service (e.g. the Internet) through the network.

An example can be found in WO02/058336. Disadvantages of the traditional cellular network architecture may include high cost per bit and low overall network capacity. Acquiring spectrum licenses, building radio towers, installing base station equipment and providing backhaul is costly. The low network capacity can be attributed to the large average distance between terminal and base station; often a kilometre or more. This may lead to low average bit rates and (in densely populated areas) a large number of terminals competing for spectrum access in the same cell.

In many urban areas where cellular networks capable of mobile broadband services are being deployed there already is a fine-knit radio access network consisting of residential Internet connections and IEEE 802.11 compatible wireless access points. Also, because of the on-demand nature of Internet communication only about 1-2% of the total capacity of this infrastructure is used at a given point in time. To take advantage of this fine-knit radio access network a system, a method, a server and an access point has been disclosed in WO2010/145882. The system allows a roaming user to take advantage of an IEEE 802.11 network associated with another service provider and connect to it by giving user authentication credentials as if the user was accessing an IEEE 802.11 network associated with his own service provider.

In one embodiment of the invention disclosed in WO2010/145882 a single service provider server is implemented for each Internet service provider, possibly using several computer servers in a redundant high availability configuration.The network address of such a service provider server may be stored in a service provider list in a master server. In the embodiment there is a number of access points, each installed in a subscriber's premises. The access points are operatively connected to the service provider server and the master server, thereby enabling the service provider to provide a mobile wireless service to the subscriber. One disadvantage of this embodiment may be that a subscriber must configure their terminals to connect to a separate virtual wireless network corresponding to the Internet service provider's service provider server in order to use the mobile wireless service. It may also not be apparent to all users how to reconfigure a terminal to a new network which will effetively prevent a user from taking advantage of the system. Furthermore, it is costly to manage authentication credentials and the cost of a central service provider server is not negligable. To overcome this the service provider must maintain and update instructions and support to customers to also include how to connect a terminal to a virtual wireless network.

### Summary of the Invention

The present invention proposes to solve, or at least mitigate, the abovementioned problems by providing methods, systems, apparatuses and computer programs for establishing a data connection between a terminal and a data communications network.

According to an aspect there is provided a method for use in an access point for establishing a data connection between a terminal and a data communications network, comprising: receiving, from the terminal, a service provider request provided in a Probe Request frame comprising a MAC address of the terminal and optionally an SSID identifying a service provider preferred by the terminal; sending, to a master server, request information pertaining to MAC address of the terminal and optionally an SSID identifying a service provider preferred by the terminal; receiving, from the master server, acknowledgement information relating to at least one service provider server associated with a service provider capable of operatively connecting the terminal to the data communications network via the access point; establishing a network connection to a service provider server associated with one of said at least one service provider, said service provider server being comprised in an access point; receiving, from said service provider server, a set of instructions; allocating a virtual access point according to said instructions; and establishing a data connection between the terminal and the data communications network via the virtual access point according to said instructions. In one embodiment the method is adapted to be performed compliant to an IEEE 802.11 standard.

According to an aspect there is provided an access point for establishing a data connection between a terminal and a data communications network, comprising: a receiver for receiving from the terminal, a service provider request provided in a Probe Request frame comprising a MAC address of the terminal and optionally an SSID identifying a service provider preferred by the terminal; a sender for sending, to a master server, request information pertaining to MAC address of the terminal and optionally an SSID identifying a service provider preferred by the terminal; the receiver further being configured to receive, from the master server, acknowledgement information relating to at least one service provider server associated with a service provider capable of operatively connecting the terminal to the data communications network via the access point; a processing unit being configured to establish a network connection to a service provider server associated with one of said at least one service provider, said service provider server being comprised in an access point; the receiver further being configured to receive, from said service provider server, a set of instructions; the processing unit being further configured to allocate a virtual access point according to said instructions; and the processing unit being further configured to establish a data connection between the terminal and the data communications network via the virtual access point according to said instructions.

According to an aspect there is provided a method for use in a master server for establishing a data connection between a terminal and a data communications network, comprising: receiving, from an access point, request information pertaining to a service provider request; searching for an association between a the terminal and a service provider server based on the received request information; and sending acknowledgement information relating to at least one service provider server associated with a service provider capable of operatively connecting the terminal to the data communications network via the access point.

According to an aspect there is provided a master server for establishing a data connection between a terminal and a data communications network, comprising: a receiver for receiving, from an access point, request information pertaining to a service provider request; a processor unit for searching for available service providers based on the received request information; and a sender for sending acknowledgement information relating to available service providers capable of operatively connecting the terminal to the data communications network via the access point.

According to an aspect there is provided a method in a system comprising an access point, a master server and a service provider server for establishing a data connection between a terminal and a data communications network, comprising: receiving, by the access point, a service provider request; sending, by the access point, request information pertaining to the service provider request to the master server; receiving, by the master server, the request information; searching, by the master server, for an associated service provider server based on the received request information; receiving, by the access point, acknowledgement information relating to at least one service provider server associated with a service provider capable of operatively connecting the terminal to the data communications network via the access point; establishing, at an access point, a network connection to a remote service provider server associated with one of said at least one service provider, said service provider server being comprised in an access point; receiving, at an access point from said service provider server, a set of instructions; allocating, at an access point, a virtual access point according to said instructions; receiving, by the access point, authentication information relating to the established data connection using the selected service provider; sending, by the access point, the received authentication information to the service provider server; and establishing, at an access point, a data connection between the terminal and the data communications network via the virtual access point according to said instructions.

According to an aspect there is provided computer programs for performing the methods disclosed herein.

One advantage may be that a terminal previously connected to the regular wireless network may automatically connect to the virtual wireless network without any change to the configuration of the terminal. One advantage may be that the Internet service provider may not need to invest in, install and operate one or several computer servers to implement a separate service provider server. One advantage may be that the authentication information stored in the access point and used to restrict access to the regular wireless network may be reused to restrict access to the mobile wireless service. One advantage may be that the Internet service provider may not need to retrain customer support staff to assist subscribers in connecting to a separate virtual wireless network. One advantage may be that the Internet service provider may not need to update the documentation provided to subscribers to include instructions on how to connect a terminal to a separate virtual wireless network.

To enable a terminal previously connected to a regular wireless network to automatically connect to the virtual wireless network may have important business benefits. For example, the mobile service will automatically be available to all subscribers which have previously connected a terminal to the regular wireless network in their premises. This means that service uptake will be high even if the Internet service provider does not spend any resources on marketing the service. Furthermore a captive portal function may be implemented in the service provider server. This makes it more convenient for a subscriber and may also promote a higher sell-through rate for the system. This also makes it more convenient for a subscriber to purchase a subscribtion there and then and start using the service immediately.

Another advantage of the teachings herein is that since a service provider server 106 performs many of the same functions normally performed by a regular access point 104 few additional hardware resources are required to implement the service provider server 106 in the access point.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

Embodiments of the present invention will now be described, by way of example, with reference to the accompanying schematic drawings, in which
Fig. 1 is a schematic view of a prior art communications system,
Fig. 2 is a schematic view of a prior art communications system,
Fig. 3 is a schematic view of a communications system according to embodiments,
Fig. 4 is a time dependency graph of a communications system according to embodiments,
Fig. 5a is a schematic view of a master server according to embodiments,
Fig. 5b is a schematic view of an access point according to embodiments, and
Fig. 6 is a flowchart according to embodiments.

### Detailed Description of Preferred Embodiments

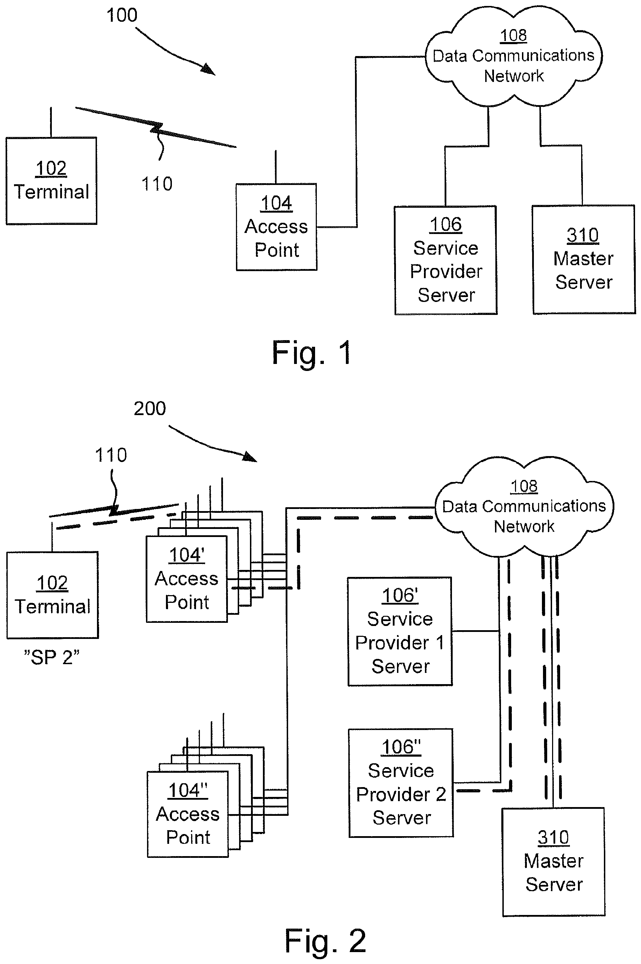

In general like numbers refer to like elements throughout the disclosure. A first communications system 100 is illustrated in Fig. 1. This is the same system as has been disclosed in WO 2010/145882. The system 100 comprises a terminal 102, a data communications network 108, a so-called master server 310, an access point 104 and a service provider server 106. The terminal, which for example may be a computer, a personal digital assistant, a mobile communications device or the like, is arranged to be wirelessly operatively connected to the data communications network via the access point as illustrated by reference numeral 110. The data communications network may be a local area network, or a wide area network, and may provide access to different services such as Telephony, Television, and the Internet. The access point may be a wireless router, a residential gateway or a modem such as a cable modem or ADSL (Asymmetric Digital Subscriber Line) modem. The service provider server is associated with the service provider of the terminal. In general the system 100 may comprise a plurality of terminals and access points. The terminal may conform to the IEEE 802.11 standard. The present invention does not require an IEEE 802.11 compatible terminal to be modified. The access point 104 is configured to be operatively connected to both the service provider server 106 and the master server 310 via the data communications network 108.

Modern IEEE 802.11 access points support a virtual access point feature. That is, one physical access point can appear to terminals as several separate access points, each with its own network name, or so-called Service Set Identifier (SSID). This feature is sometimes used by operators to let one or a few service providers more clearly indicate or advertise the availability of their services through their own SSID. Traffic received by the access point from terminals associated with this SSID is usually emitted on a separate Ethernet Virtual Local Area Network (VLAN) so that a separate captive portal interface can be used for this virtual network.

As has been discussed in WO 2010/145882, IEEE 802.11 compatible terminals assume that (virtual) access points with the same SSID belong to the same Extended Service Set (ESS), i.e. that they provide Layer 2 connectivity to the same network. This enables automatic hand-over between access points while maintaining higher layer connections, e.g. TCP/IP connections. The proposed network architecture dynamically allocates a separate virtual access point for each requested service provider on demand. This enables a network operator to distribute the services of a very large number of service providers. Also, the proposed network architecture ensures that Layer 2 connectivity is maintained even as the terminal roams between access points associated with separate network operators. This enables a service provider to distribute its services through the access points of a very large number of network operators, possibly with overlapping network coverage. Furthermore, the proposed network architecture enables a third party to operate a master server and act as the clearing partner for roaming between service providers and network operators. This ensures that service providers and network operators only need a roaming agreement with the third party, thereby reducing the number of necessary legal agreements to a manageable level. Combined, these improvements make it feasible to, among other applications, use low cost IEEE 802.11 based access points connected to residential Internet connections to provide mobile broadband on a large scale.

A second communications system 200 is illustrated in Fig. 2. The communications system 200 comprises a terminal 102, a data communications network 108, and a master server 310. In contrast to the system 100 the system 200 further comprises a first plurality of access points, one of which is denoted by reference numeral 104', a second plurality of access points, one of which is denoted by reference numeral 104", a server 106' for a first service provider, and a server 106" for a second service provider. The first plurality of access points and the second plurality of access points are operatively connected to the master server 310. As indicated in Fig. 2 the system 200 may comprise a plurality of service providers and a plurality of access points operated by a plurality of network operators. The services of each service provider may be accessed through a plurality of access points. However, a service provider request not associated with the service provider of the receiving access point does not need to be sent to the service provider server of the receiving access point. Instead, as disclosed in WO 2010/145882, in case a requested service provider is not found in the service provider list of the access point, the service provider request is forwarded to the master server. The master server may then perform a lookup of the requested service provider and forward the request to this service provider server. Thus, the master server may serve as an independent party.

For example, assume that the terminal 102 of Fig. 2 requests access to the data communications network 108 via a service provider associated with service provider server 106", as denoted by "SP 2". The service provider request is received by access point 104' associated with service provider server 106'. Access point 104' does not find the requested service provider in the service provider list and hence forwards the request to the master server 310. The master server 310 performs a lookup and finds service provider server 106" associated with the requested service provider. The master server 310 then forwards the request to service provider server 106". Thereafter the data traffic pertaining to the data connection from the terminal 102 and the data communications network 108 may be directed directly from the access point 104' to the service provider server 106" (i.e. without being directed via the service provider server 106' associated with the access point 104'). In Fig. 2 the associated data traffic paths are outlined by the dashed lines.

Further details as to the workings and details of the systems of figures 1 and 2 are to be found in WO 2010/145882 and are incorporated herein, especially as pertains to functionality according to the IEEE 802.11 standard. In WO 2010/145882 the systems 100 and 200 are referenced as 300 and 400. It should be noted that also details regarding the system referenced as 200 in WO 2010/145882 are incorporated herein.

One disadvantage of the systems 100 and 200 of figures 1 and 2 is that a subscriber must configure their terminals to connect to a separate virtual wireless network corresponding to the Internet service provider's service provider server in order to use the mobile wireless service. The first time a roaming user connects to a second or foreign network the user will be requested to connect to the second service provider 106" in figure 2. This requires that the user configures his terminal 102 to connect to a separate virtual wireless network according to the settings of the service provider's central service provider server in order to use the mobile wireless service. Furthermore, the Internet service providers must invest in, install and operate one or several computer servers to implement the service provider servers 106' and 106". The Internet service provider must also create, distribute and store authentication information to be used to restrict access to the mobile wireless service. Additionally, the Internet service provider must retrain customer support staff to assist subscribers in connecting their terminals to the virtual wireless network and the Internet service provider must also update the documentation provided to subscribers to include instructions on how to connect a terminal to the virtual wireless network.

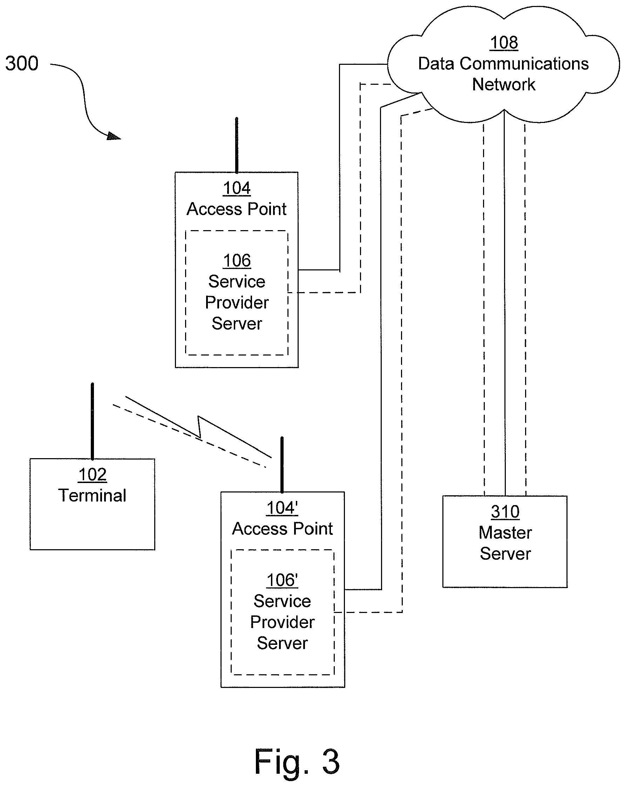

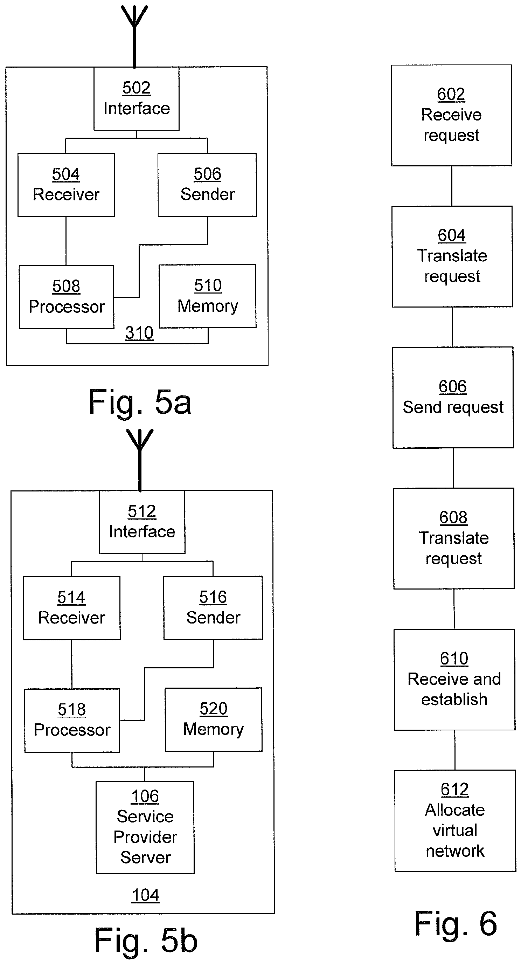

Figure 3 illustrates a communication system 300 according to an embodiment of the teachings herein. The communication system 300 comprises at least one terminal 102, a data communications network 108, and a master server 310 and at least a first access point 104 and at least a second access point 104' which are operatively connected to the master server 310 through the data communications network 108. A master server 310 will be described below with reference to figure 5a. An access point 104 will be described below with reference to figure 5b. In one embodiment the communications system 300 and the devices of the communications system 300 are adapted according to the IEEE 802.11 standard.

Each access point 104 and 104' is associated with a service provider server 106 and 106'. As is illustrated in figure 3 the service provider servers 106, 106' are implemented in the corresponding access points 104, 104'. The service provider server 106 is configured to distribute a virtual wireless network which is similar in properties to that of the regular wireless network. The similarity may for example lie in that the virtual wireless network has the same SSID (Service Set Identifier) as the regular wireless network. The service provider server 106 is further configured to provide access to a same Layer 2 segment of the data communications network 108 as the regular wireless network. In one embodiment an authentication mechanism, such as defined in the IEEE 802.11i standard, is used to restrict access to the regular wireless network and the service provider server is configured to use the same authentication mechanism and the same authentication information stored in the access point 104. The virtual wireless network and the regular wireless network may be indistinguishable from a terminal's 102 perspective and the service provider server 106 may in effect provide remote access to the regular wireless network.

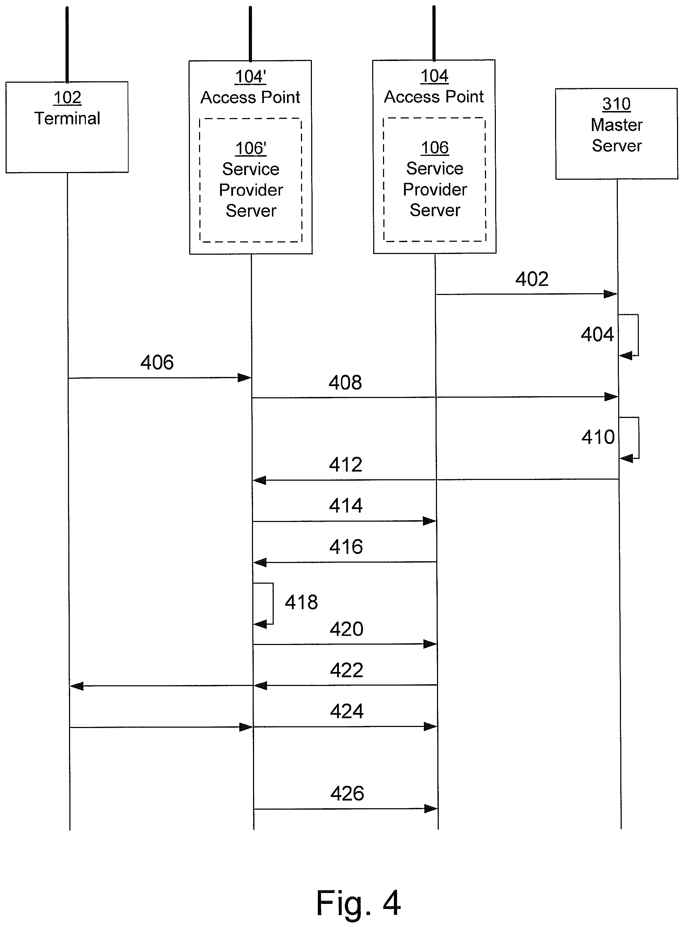

The functionality of the communications system 300 will now be described through an exemple embodiment with simulatenous reference given to figure 3, figure 4 and figure 6. Figure 4 is a time flow graph of messages sent between various devices in a communications system according to herein. Figure 6 is a flow chart of a method according to herein. The terminal 102 is connected to a regular wireless network emitted by a first communications interface of the access point 104. A network message 402, containing the MAC address of the terminal 102 and the BSSID (Basic Server Set IDentifier) or the SSID of the regular wireless network is generated and sent to the master server 310 through a second communications interface of the access point 104. The master server 310 receives and decodes the network message. The master server stores 404 the information decoded from the network message as an association between the terminal 102 and the service provider server 106. The terminal 102 then leaves the coverage area of the first access point 104 and enters the coverage area of the second access point 104'. The terminal 102 sends out a service provider request 406 to the second access point 104' and the access point 104' receives 602 the service provider request from the terminal 102, translates the service provider request into a service provider request network message 604 and sends 606 the service provider request network message 408 to the master server 310 through the second communications interface. The master server 310 searches its memory and finds the previously stored association 410 between the terminal 102 and the service provider server 106. The master server 310 translates 608 this association into a service provider request response network message containing the network address of the service provider server 106 and sends 412 this to the access point 104'. The access point 104' receives the message 610 and establishes 414 a network connection to the service provider server 106 in the access point 104 through the data communications network 108. The service provider server 106 constructs and sends 416 over this network connection a set of instructions which the access point 104' receives, decodes and uses to allocate 418 a virtual access point emitting, through its first communications interface, a virtual wireless network similar in properties, e.g. SSID, to the regular wireless network emitted through the first communications interface of the access point 104. The access point 104' may further configure 420 (double arrows indicate that the action is performed by the second access point 104' using the first service provider server 106) the virtual access point to use the service provider server 106 as an Authentication, Authorization and Accounting (AAA) server to authenticate 422 the terminal 102, e.g. using a protocol such as RADIUS. One advantage of using a protocol such as RADIUS may be that the authentication information is prevented from being stolen by a person with control over the access point 104'. The service provider server 106 may be configured to provide remote authentication (422) based on the authentication information stored in the access point 104. The terminal 102 may automatically connect to and authenticate 424 with the virtual wireless network distributed through the access point 104' using the authentication information previously entered when connecting the terminal to the regular wireless network emitted by access point 104. The access point 104' may further establish 426 a Layer 2 tunnel to the service provider server 106 so as to provide the terminal Layer 2 connectivity to the same local area network as the regular wireless network. If the terminal is an IEEE 802.11 standard conformant terminal its hardware, software or configuration may not need to be changed to achieve this functionality. In general the system 100 may comprise a plurality of terminals and access points.

In one alternative embodiment the set of instructions constructed and sent (416) from the service provider server 106 to the access point 104' may include the authentication information stored in the access point 104. One advantage of this alternative embodiment may be that the virtual access point function in the access point 104' may not need to support a remote authentication protocol such as RADIUS.

In one embodiment the implementation of the IEEE 802.11 media access control (MAC) layer is split between the access point 104' and the service provider server 106. The access point 104' implements the real-time aspects of the MAC layer, e.g. the transmission of acknowledgement (Ack) frames, whereas the service provider server 106 implements non-real-time aspects, such as authentication and encryption key management. Control messages and data frames encrypted according to the IEEE 802.11i standard are transferred over the data communications network 108 without possibility of interception or modification using e.g. a UDP/IP based protocol such as CAPWAP. This end-to-end encryption, and mutual authentication between the terminal 102 and the service provider server 106, ensures that no trust relationship between the user and the persons in control of the access point 104' is necessary. Not even with physical control over the access point 104' is it possible to intercept or modify data frames. The end user only needs to trust that the access point 104, often installed in his or her premises, is secure. This is a commonly established trust relationship.

By enabling a terminal 102 previously connected to a regular wireless network to automatically connect to the virtual wireless network a captive portal function may be implemented in the service provider server 106 in the access point 104, thereby initially restricting access to a payment portal operated by the Internet service provider. Through the portal interface the subscriber may accept a surcharge for use of the mobile wireless service. If the subscriber accepts the surcharge the access restriction may be lifted to grant the terminal full access to the data communicationsnetwork. The surcharge may depend on the access point through which the terminal is connected. Since the subscriber may already be security authenticated through a security mechanism such as defined by the IEEE 802.11i standard it may not be necessary to separately authenticate the subscriber at the point of purchase. Instead the subscriber may simply accept the surcharge to be added to the next invoice sent to the subscriber. One advantage may be convenience for the subscriber. One advantage may be a higher sell-through rate.

The interaction between an access point 104 and a master server 310 may also be improved. Since the master server 310 may not need to know the SSID in order to deduce the preferred service provider of the terminal 102 it may not be necessary to include this information when a service provider request is translated to a network message in an access point. Also, since an access point 104 may be able to intercept radio frames containing an identifier for the terminal before a service provider request is received from the same it may construct and send to the master server a service provider request at such earlier time. If so then a service provider request response may be constructed and sent after a shorter delay once a service provider request is received from the terminal 102, since a connection to the terminal's 102 preferred service provider servers may already have been established. One advantage may be that the probability of a noticeable delay when connecting the terminal to a virtual wireless network may be reduced.

In one embodiment the master server 310 is configured to integrate information about accepted surcharges with account information pertaining to the connections between access points and service provider servers. This information may be used to calculate, using a set of distribution keys, a distribution of a portion of the surcharges accepted by subscribers among all Internet service providers with access points using the master server. The set of distribution keys may include, among other, the surcharge amount; the quantity of data the subscriber has transferred through an access point; the time duration a subscriber has been connected through an access point and the location of the access points through which the subscriber has been connected. One advantage may be that a revenue sharing business model may be implemented.

The master server 310 may receive account information pertaining to the connection between a service provider server and an access point from both parties separately. A discrepancy between the account information reported by the access point and the account information reported by the service provider server may indicate fraud. The master server may analyze account information to discover such discrepancies and notify operating personnel. The master server may further choose to ignore the account information most likely to be fraudulent. The source of account information most likely to be fraudulent may be determined by examining the distribution keys and determining which of the parties, Internet service provider or subscriber, with the opportunity to manipulate the account information has an economic incentive to do so.

Since a service provider server 106 performs many of the same functions normally performed by a regular access point 104 few additional hardware resources are required to implement the service provider server 106 in the access point. Also, a regular access point comprises a communications interface which can in many cases be shared between the regular functioning of the access point and the service provider server implementation. Therefore a service provider server 106 may be implemented in an access point 104 through a software upgrade. One advantage may be that an Internet service provider may not have to replace existing access points. If the software in the access point can be updated remotely one advantage may be that a service provider server 106 may be implemented in an access point without reinstallation and the associated cost.

The interaction between service provider server 106 and master server 310 may be improved, especially in the case where a service provider server 310 is implemented in an access point 104. For example, since each Internet service provider may operate a large number of access points 104 it may be necessary to automatically register the network address of each access point 104 in a service provider list stored in the memory of the master server 310. Also, since the configuration of the access point is often under the subscribers control it may not be possible to guarantee that the SSID of the regular wireless network is unique among all regular wireless networks from the perspective of the master server. Therefore it may be preferable to instead identify a service provider server by an identifier for the regular wireless network to which it provides remote access. The service provider server may for example register its network address in the service provider list of the master server by constructing and sending to the master server, e.g. at the time of starting the access point or connecting the same to the data communications network, a network message containing the network address of the second communications interface of the access point and the BSSID of the regular wireless network emitted through the first communications interface of the access point. When a terminal is connected to the regular wireless network the access point may construct and send to the master server a network message containing an identifier for the terminal, for example its MAC address, and an identifier for the regular wireless network, for example its BSSID. The master server may receive this network message and store an association between the identified terminal and the service provider server which provides remote access to the identified regular wireless network. The master server may later use this information to deduce the terminals preferred service providers, in this case the regular wireless networks to which it has previously been connected, using the methods disclosed in WO 2010/145882.

Fig. 5a is a schematic illustration of internal components of a so-called master server 310 according to embodiments. In general terms the master server 310 is configured to perform operations associated with the process of operatively connecting a terminal to a data communications system, wherein the operations may comprise receiving request information pertaining to a service provider request, searching for available service providers based on the received request information, and sending acknowledgement information relating to available service providers. The master server 310 may also be configured to store information related thereto. The master server 310 comprises a communications interface 502. The communications interface 502 may be an antenna and/or a network socket, or the like, enabling the master server 310 to communicate with other entities in a communications system. In one embodiment the master server is a cloud server. The communications interface 502 is arranged to be in communication with a receiver 504 arranged to receive data messages and signals and with a sender 506 arranged to send data messages and signals. The receiver 504 and the sender 506 are arranged to be in communication with a processing unit 508. The processing unit 508 may be a Central Processing Unit (CPU). The processing unit 508 is further arranged to be in communication with a memory 510.

In a preferred embodiment the master server is implemented using several computer servers in a redundant high availability configuration. The communications interface is implemented as a network socket bound to an IP address reachable from a wide area network, such as the Internet.

Fig. 5b is a schematic illustration of internal components of an access point 104 according to embodiments. The access point 104 comprises a communications interface 512. The communications interface 512 may be an antenna and/or a network socket, or the like, enabling the access point 104 to communicate with other entities in a communications system. The communications interface 512 is arranged to be in communication with a receiver 514 arranged to receive data messages and signals and with a sender 516 arranged to send data messages and signals. The receiver 514 and the sender 516 are arranged to be in communication with a processing unit 518. The processing unit 518 may be a Central Processing Unit (CPU). The processing unit 518 is further arranged to be in communication with a memory 520.

In a preferred embodiment the access point is implemented using a low cost embedded system with two communications interfaces. The first communications interface used primarily for communication with the terminal comprises an IEEE 802.11 compatible radio with a software defined media access control (MAC) layer. Software control over the MAC layer makes it possible to realize the disclosed methods and devices using standard low cost IEEE 802.11 hardware. The second communications interface is used primarily for communication with the master server and comprises a network socket bound to an IP address from which the master server can be reached. An IP based second communications interface makes it possible to deploy an access point in any location with Internet access. In one embodiment the access point 104 is a router, a (residential) gateway or a modem such as a cable modem or an ADSL modem.

A service provider server 106 is also comprised in the access point 104. The service provider server 106 is connected to the processor 518 and optionally to the memory 520. In one embodiment the service provider server 106 is implemented as a standalone server having an internal processor (not shown) and an internal memory (not shown) and being connected to the processor 518 of the access point through an interface (not shown). In one embodiment the service provider server is implemented through the use of the processor 518 and the memory 520 through a set of instructions stored in the memory 520 and connection data also to be stored in the memory 520. Optionally the instructions and/or the connection data are stored in an additional memory (not shown).

In this context it should be noted that, as the terminal 102 may be a mobile terminal, the disclosed communications systems may be configured to handle handover and roaming issues.

It will be appreciated that a person skilled in the art can modify the above-described embodiments in many ways and still use the advantages of the invention as shown in the embodiments above. Thus, the invention should not be limited to the shown embodiments but should only be defined by the appended claims.

## Claims

1. A method for use in an access point for establishing a data connection between a terminal and a data communications network, comprising
- Receiving, from the terminal, a service provider request provided in a Probe Request frame comprising a MAC address of the terminal, wherein the terminal has previously been connected to a regular wireless network emitted by an other access point, wherein a network message comprising the MAC address of the terminal has been sent from the other access point to the master server and wherein information of the network message has been stored in the master server;
- Sending, to a master server, request information pertaining to the service provider request;
- Receiving, from the master server, acknowledgement information relating to a service provider server being comprised in the other access point and associated with a service provider capable of operatively connecting the terminal to the data communications network via the access point;
- Establishing a network connection to the service provider server;
- Receiving, from said service provider server, a set of instructions;
- Allocating a virtual access point according to said instructions; and
- Establishing a data connection between the terminal and the data communications network via the virtual access point according to said instructions.

2. The method according to claim 1, further comprising authenticating the terminal using said service provider server as an Authentication, Authorization and Accounting server.

3. The method according to claim 2, further comprising receiving, from the terminal, an authentication response comprising previously entered authentication information for the service provider.

4. The method according to claim 3 wherein the set of instructions comprise authentication information stored in the other access point.

5. The method according to any of claims 1 to 4, further comprising establishing a Layer 2 tunnel to the service provider server.

6. The method of claim 5 wherein an implementation of an IEEE 802.11 media access control (MAC) layer is split between the access point and the service provider server such that the access point implements real-time aspects of an IEEE 802.11 media access control layer and the service provider server implements non-real-time aspects of the IEEE 802.11 media access control layer.

7. The method according to claim 1, further comprising intercepting radio frames containing an identifier, such as the MAC address, for the terminal and in response thereto sending the request to the master server.

8. The method according to any preceding claim, wherein said Probe Request frame is an IEEE 802.11 Probe Request frame.

9. The method according to any preceding claim, wherein the terminal is a first terminal, further comprising
- Sending, to the master server, a network message comprising the MAC address of a second terminal connected to a regular wireless network emitted by the access point for storing an association between the second terminal and the regular wireless network emitted by the access point.

10. The method according to any preceding claim wherein the network message further comprises one of a BSSID, an SSID and an identifier for the regular wireless network emitted by the other access point.

11. An access point for establishing a data connection between a terminal and a data communications network, comprising
- a receiver for receiving from the terminal, a service provider request provided in a Probe Request frame comprising a MAC address of the terminal, wherein the terminal has previously been connected to a regular wireless network emitted by an other access point, wherein a network message comprising the MAC address of the terminal has been sent from the other access point to the master server and wherein information of the network message has been stored in the master server;
- a sender for sending, to a master server, request information pertaining to the service provider request;
- the receiver further being configured to receive, from the master server, acknowledgement information relating to a service provider server being comprised in the other access point and associated with at least one service provider capable of operatively connecting the terminal to the data communications network via the access point;
- a processing unit being configured to establish a network connection to the service provider server;
- the receiver further being configured to receive, from said service provider server, a set of instructions;
- the processing unit being further configured to allocate a virtual access point according to said instructions; and
- the processing unit being further configured to establish a data connection between the terminal and the data communications network via the virtual access point according to said instructions.

12. A method for use in a master server for establishing a data connection between a terminal and a data communications network, comprising
- Receiving, from a first access point, a network message comprising a MAC address of the terminal connected to a regular wireless network emitted by the first access point;
- Storing information of the network message;
- Receiving, from a second access point, request information pertaining to a service provider request sent from the terminal to the second access point;
- Searching for an association between the terminal and a service provider server based on the received request information; and
- Sending acknowledgement information relating to a service provider server associated with a service provider capable of operatively connecting the terminal to the data communications network via the second access point.

13. The method according to claim 12, further comprising storing information about accepted surcharges with account information pertaining to the connections between access points and service provider servers.

14. A master server for establishing a data connection between a terminal and a data communications network, comprising
- a receiver for receiving, from a first access point, a network message comprising a MAC address of the terminal connected to a regular wireless network emitted by the first access point;
- a memory for storing information of the network message;
- the receiver further being configured to receive, from a second access point, request information pertaining to a service provider request sent from the terminal to the second access point;
- a processor unit for searching for available service providers based on the received request information; and
- a sender for sending acknowledgement information relating to available service providers capable of operatively connecting the terminal to the data communications network via the second access point.

15. A method in a system comprising first and second access points, a master server and a service provider server for establishing a data connection between a terminal and a data communications network, the service provider server being comprised in the first access point, the method comprising
- Receiving, by the master server from the first access point, a network message comprising a MAC address of the terminal connected to a regular wireless network emitted by the first access point;
- Storing, by the master server, information of the network message;
- Receiving, by the second access point from the terminal, a service provider request;
- Sending, by the access point, request information pertaining to the service provider request to the master server;
- Receiving, by the master server, the request information;
- Searching, by the master server, for an associated service provider server based on the received request information;
- Receiving, by the access point from the master server, acknowledgement information relating to a service provider server being comprised in the first access point and associated with a service provider capable of operatively connecting the terminal to the data communications network via the second access point;
- Establishing, at the second access point, a network connection to the service provider server;
- Receiving, at the second access point from said service provider server, a set of instructions;
- Allocating, at the second access point, a virtual access point according to said instructions;
- Receiving, by the second access point from the terminal, authentication information relating to the established data connection using the selected service provider;
- Sending, by the second access point, the received authentication information to the service provider server; and
- Establishing, at the second access point, a data connection between the terminal and the data communications network via the virtual access point according to said instructions.

16. A system adapted to perform the method of claim 15.

17. A computer program product stored on a computer-readable medium, comprising instructions that when executed on a processor cause a method according to claim 1 to be performed.

18. A computer program product stored on a computer-readable medium, comprising instructions that when executed on a processor cause a method according to claim 12 to be performed.

19. A computer program product stored on a computer-readable medium, comprising instructions that when executed on a processor cause a method according to claim 15 to be performed.

## Patentansprüche

1. Verfahren zur Benutzung in einem Zugriffspunkt zum Aufbauen einer Datenverbindung zwischen einem Endgerät und einem Datenkommunikationsnetzwerk, umfassend
- Empfangen, von dem Endgerät, einer Dienstanbieteranfrage, die in einem eine MAC-Adresse des Endgeräts umfassenden Probe Request-Rahmen bereitgestellt wird, wobei das Endgerät zuvor mit einem von einem anderen Zugriffspunkt ausgesendeten regulären drahtlosen Netzwerk verbunden war, wobei eine die MAC-Adresse des Endgeräts umfassende Netzwerknachricht von dem anderen Zugriffspunkt an den Master-Server gesendet wurde und wobei Informationen der Netzwerknachricht in dem Master-Server gespeichert wurden;
- Senden, an einen Master-Server, von Anfrageinformationen, die die Dienstanbieteranfrage betreffen;
- Empfangen, von dem Master-Server, von Bestätigungsinformationen, die sich auf einen von dem anderen Zugriffspunkt umfassten Dienstanbieterserver beziehen und der einem Dienstanbieter zugeordnet ist, der imstande ist, das Endgerät im Betrieb mit dem Datenkommunikationsnetzwerk über den Zugriffspunkt zu verbinden;
- Aufbauen einer Netzwerkverbindung zu dem Dienstanbieterserver;
- Empfangen, von dem Dienstanbieterserver, eines Satzes von Anweisungen;
- Zuteilen eines virtuellen Zugriffspunkts entsprechend der Anweisungen; und
- Aufbauen einer Datenverbindung zwischen dem Endgerät und dem Datenkommunikationsnetzwerk über den virtuellen Zugriffspunkt entsprechend der Anweisungen.

2. Verfahren nach Anspruch 1, ferner umfassend ein Authentifizieren des Endgeräts unter Benutzung des Dienstanbieterservers als einen Authentifizierungs-, Autorisierungs- und Abrechnungsserver.

3. Verfahren nach Anspruch 2, ferner umfassend ein Empfangen, von dem Endgerät, einer Authentifizierungsantwort umfassend zuvor eingegebene Authentifizierungsinformationen für den Dienstanbieter.

4. Verfahren nach Anspruch 3, wobei der Satz von Anweisungen Authentifizierungsinformationen umfasst, die in dem anderen Zugriffspunkt gespeichert sind.

5. Verfahren nach einem der Ansprüche 1 bis 4, ferner umfassend ein Aufbauen eines Schicht-2-Tunnels zu dem Dienstanbieterserver.

6. Verfahren nach Anspruch 5, wobei eine Implementierung einer IEEE-802.11-Medienzugriffssteuerungs- (MAC-) Schicht zwischen dem Zugriffspunkt und dem Dienstanbieterserver so aufgeteilt wird, dass der Zugriffspunkt Echtzeitaspekte einer IEEE-802.11-Medienzugriffssteuerungsschicht implementiert und der Dienstanbieterserver Nicht-Echtzeitaspekte der IEEE-802.11-Medienzugriffssteuerungsschicht implementiert.

7. Verfahren nach Anspruch 1, ferner umfassend ein Abfangen von Funkrahmen, die eine Identifizierung, wie die MAC-Adresse, für das Endgerät enthalten und, als Reaktion darauf, das Senden der Anfrage an den Master-Server.

8. Verfahren nach einem der vorhergehenden Ansprüche, wobei der Probe Request-Rahmen ein IEEE-802.11-Probe-Request-Rahmen ist.

9. Verfahren nach einem der vorhergehenden Ansprüche, wobei das Endgerät ein erstes Endgerät ist, ferner umfassend
- Senden, an den Master-Server, einer Netzwerknachricht umfassend die MAC-Adresse eines zweiten Endgeräts, das mit einem von dem Zugriffspunkt ausgesendeten regulären drahtlosen Netzwerk verbunden ist, zum Speichern einer Zuordnung zwischen dem zweiten Endgerät und dem von dem Zugriffspunkt ausgesendeten regulären drahtlosen Netzwerk.

10. Verfahren nach einem der vorhergehenden Ansprüche, wobei die Netzwerknachricht ferner eine aus einer BSSID, einer SSID und einer Identifizierung für das von dem Zugriffspunkt ausgesendete reguläre drahtlose Netzwerk umfasst.

11. Zugriffspunkt zum Aufbauen einer Datenverbindung zwischen einem Endgerät und einem Datenkommunikationsnetzwerk, umfassend
- einen Empfänger zum Empfangen, von dem Endgerät, einer Dienstanbieteranfrage, die in einem eine MAC-Adresse des Endgeräts umfassenden Probe Request-Rahmen bereitgestellt ist, wobei das Endgerät zuvor mit einem von einem anderen Zugriffspunkt ausgesendeten regulären drahtlosen Netzwerk verbunden war, wobei eine die MAC-Adresse des Endgeräts umfassende Netzwerknachricht von dem anderen Zugriffspunkt an den Master-Server gesendet wurde und wobei Informationen der Netzwerknachricht in dem Master-Server gespeichert wurden;
- einen Sender zum Senden, an einen Master-Server, von Anfrageinformationen, die die Dienstanbieteranfrage betreffen;
- wobei der Empfänger ferner ausgebildet ist zum Empfangen, von dem Master-Server, von Bestätigungsinformationen, die sich auf einen von dem anderen Zugriffspunkt umfassten Dienstanbieterserver beziehen und der zumindest einem Dienstanbieter zugeordnet ist, wobei der Dienstanbieter der imstande ist, das Endgerät im Betrieb mit dem Datenkommunikationsnetzwerk über den Zugriffspunkt zu verbinden;
- ein Verarbeitungselement, das ausgebildet ist zum Aufbauen einer Netzwerkverbindung zu dem Dienstanbieterserver;
- wobei der Empfänger ferner ausgebildet ist zum Empfangen, von dem Dienstanbieterserver, eines Satzes von Anweisungen;
- wobei das Verarbeitungselement ferner ausgebildet ist zum Zuteilen eines virtuellen Zugriffspunkts entsprechend der Anweisungen; und
- wobei das Verarbeitungselement ferner ausgebildet ist zum Aufbauen einer Datenverbindung zwischen dem Endgerät und dem Datenkommunikationsnetzwerk über den virtuellen Zugriffspunkt entsprechend der Anweisungen.

12. Verfahren zur Benutzung in einem Master-Server zum Aufbauen einer Datenverbindung zwischen einem Endgerät und einem Datenkommunikationsnetzwerk, umfassend
- Empfangen, von einem ersten Zugriffspunkt, einer Netzwerknachricht umfassend eine MAC-Adresse des Endgeräts, das mit einem von dem anderen Zugriffspunkt ausgesendeten regulären drahtlosen Netzwerk verbunden ist;
- Speichern von Information der Netzwerknachricht;
- Empfangen, von einem zweiten Zugriffspunkt, von Anfrageinformationen betreffend eine Dienstanbieteranfrage, die von dem Endgerät an den zweiten Zugriffspunkt gesendet wurde;
- Suchen nach einer Zuordnung zwischen dem Endgerät und einem Dienstanbieterserver basierend auf den empfangenen Anfrageinformationen; und
- Senden von Bestätigungsinformationen, die sich auf einen Dienstanbieterserver beziehen, der einem Dienstanbieter zuordnet ist, der imstande ist, das Endgerät im Betrieb mit dem Datenkommunikationsnetzwerk über den zweiten Zugriffspunkt zu verbinden.

13. Verfahren nach Anspruch 12, ferner umfassend ein Speichern von Informationen über akzeptierte Aufpreise mit Kontoinformationen betreffend die Verbindungen zwischen Zugriffpunkten und Dienstanbieterservern.

14. Master-Server zum Aufbauen einer Datenverbindung zwischen einem Endgerät und einem Datenkommunikationsnetzwerk, umfassend
- einen Empfänger zum Empfangen, von einem ersten Zugriffspunkt, einer Netzwerknachricht umfassend eine MAC-Adresse des Endgeräts, das mit einem von dem ersten Zugriffspunkt ausgesendeten regulären drahtlosen Netzwerk verbunden ist;
- einen Speicher zum Speichern von Information der Netzwerknachricht;
- wobei der Empfänger ferner ausgebildet ist zum Empfangen, von einem zweiten Zugriffspunkt, von Anfrageinformationen betreffend eine Dienstanbieteranfrage, die von dem Endgerät an den zweiten Zugriffspunkt gesendet wurden;
- eine Prozessoreinheit zum Suchen nach verfügbaren Dienstanbietern basierend auf den empfangenen Anfrageinformationen; und
- einen Sender zum Senden von Bestätigungsinformationen, die sich auf verfügbare Dienstanbieter beziehen, der imstande ist, das Endgerät im Betrieb mit dem Datenkommunikationsnetzwerk über den zweiten Zugriffspunkt zu verbinden.

15. Verfahren in einem System umfassend erste und zweite Zugriffpunkte, einen Master-Server und einen Dienstanbieterserver zum Aufbauen einer Datenverbindung zwischen einem Endgerät und einem Datenkommunikationsnetzwerk, wobei der Dienstanbieterserver von dem ersten Zugriffspunkt umfasst ist, wobei das Verfahren umfasst:
- Empfangen, mittels des Master-Servers von dem ersten Zugriffspunkt, einer Netzwerknachricht umfassend eine MAC-Adresse des Endgeräts, das mit einem von dem ersten Zugriffspunkt ausgesendeten regulären drahtlosen Netzwerk verbunden ist;
- Speichern, mittels des Master-Servers, von Information der Netzwerknachricht;
- Empfangen, mittels des zweiten Zugriffspunkts von dem Endgerät, einer Dienstanbieteranfrage;
- Senden, mittels des Zugriffpunkts, von Anfrageinformationen betreffend die Dienstanbieteranfrage an den Master-Server;
- Empfangen, mittels des Master-Servers, der Anfrageinformationen;
- Suchen, mittels des Master-Servers, nach einem zugeordneten Dienstanbieterserver basierend auf den empfangenen Anfrageinformationen;
- Empfangen, mittels des Zugriffspunkts von dem Master-Server, von Bestätigungsinformationen, die sich auf einen von dem ersten Zugriffspunkt umfassten Dienstanbieterserver beziehen und der einem Dienstanbieter zugeordnet ist, der imstande ist, das Endgerät im Betrieb mit dem Datenkommunikationsnetzwerk über den zweiten Zugriffspunkt zu verbinden;
- Aufbauen, an dem zweiten Zugriffspunkt, einer Netzwerkverbindung zu dem Dienstanbieterserver;
- Empfangen, an dem zweiten Zugriffpunkt von dem Dienstanbieterserver, eines Satzes von Anweisungen;
- Zuteilen, an dem zweiten Zugriffspunkt, eines virtuellen Zugriffspunkts entsprechend den Anweisungen;
- Empfangen, mittels des zweiten Zugriffspunkts von dem Endgerät, von Authentifizierungsinformationen, die sich auf die aufgebaute Datenverbindung beziehen, unter Benutzung des ausgewählten Dienstanbieters;
- Senden, mittels des zweiten Zugriffpunkts, der empfangenen Authentifizierungsinformationen an den Dienstanbieterserver; und
- Aufbauen, an dem zweiten Zugriffspunkt, einer Datenkommunikation zwischen dem Endgerät und dem Datenkommunikationsnetzwerk über den virtuellen Zugriffspunkt gemäß den Anweisungen.

16. System, das ausgebildet ist, das Verfahren nach Anspruch 15 durchzuführen.

17. Computerprogrammprodukt, das auf einem computerlesbaren Medium gespeichert ist, wobei das Computerprogrammprodukt Anweisungen umfasst, die, wenn auf einem Prozessor ausgeführt, ein Durchführen eines Verfahrens nach Anspruch 1 veranlassen.

18. Computerprogrammprodukt, das auf einem computerlesbaren Medium gespeichert ist, wobei das Computerprogrammprodukt Anweisungen umfasst, die, wenn auf einem Prozessor ausgeführt, ein Durchführen eines Verfahrens nach Anspruch 12 veranlassen.

19. Computerprogrammprodukt, das auf einem computerlesbaren Medium gespeichert ist, wobei das Computerprogrammprodukt Anweisungen umfasst, die, wenn auf einem Prozessor ausgeführt, ein Durchführen eines Verfahrens nach Anspruch 15 veranlassen.

## Revendications

1. Procédé à utiliser en association avec un point d'accès permettant d'établir une connexion de données entre un terminal et un réseau de communications de données, consistant à
- recevoir, du terminal, une demande de fournisseur de service fournie dans une trame de demande de sonde, comprenant une adresse MAC du terminal, dans lequel le terminal a été connecté au préalable à un réseau sans fil régulier émis par un autre point d'accès, dans lequel un message de réseau comprenant l'adresse MAC du terminal a été envoyé de l'autre point d'accès au serveur maître, et dans lequel des informations du message de réseau ont été mémorisées dans le serveur maître ;
- envoyer, à un serveur maître, des informations de demande associées à la demande de fournisseur de service ;
- recevoir, du serveur maître, des informations d'accusé de réception se rapportant à un serveur de fournisseur de service compris dans l'autre point d'accès et associé à un fournisseur de service pouvant établir une connexion fonctionnelle du terminal au réseau de communications de données par le biais du point d'accès ;
- établir une connexion de réseau avec le serveur de fournisseur de service ;
- recevoir un ensemble d'instructions dudit serveur de fournisseur de service ;
- attribuer un point d'accès virtuel conformément auxdites instructions ; et
- établir une connexion de données entre le terminal et le réseau de communications de données par le biais du point d'accès virtuel conformément auxdites instructions.

2. Procédé selon la revendication 1, consistant en outre à authentifier le terminal au moyen dudit serveur du fournisseur de service en tant que serveur d'authentification, d'autorisation et de comptabilité.

3. Procédé selon la revendication 2, consistant en outre à recevoir, du terminal, une réponse d'authentification comprenant des informations d'authentification entrées au préalable en ce qui concerne le fournisseur de service.

4. Procédé selon la revendication 3, dans lequel l'ensemble d'instructions comprend des informations d'authentification mémorisées dans l'autre point d'accès.

5. Procédé selon l'une quelconque des revendications 1 à 4, consistant en outre à établir un tunnel de couche 2 pour le serveur de fournisseur de service.

6. Procédé selon la revendication 5, dans lequel une mise en oeuvre d'une couche de contrôle d'accès au support (MAC) IEEE 802.11 est divisée entre le point d'accès et le serveur de fournisseur de service de sorte que le point d'accès mette en oeuvre des aspects de temps réel d'une couche de contrôle d'accès au support IEEE 802.11 et que le serveur de fournisseur de service mette en oeuvre des aspects autres que de temps réel de la couche de contrôle d'accès au support IEEE 802.11.

7. Procédé selon la revendication 1, consistant en outre à intercepter des trames radio contenant un identificateur, tel que l'adresse MAC, du terminal et à envoyer, en réponse à ce dernier, la demande au serveur maître.

8. Procédé selon l'une quelconque des revendications précédentes, dans lequel ladite trame de demande de sonde est une trame de demande de sonde IEEE 802.11.

9. Procédé selon l'une quelconque des revendications précédentes, dans lequel le terminal est un premier terminal, le procédé consistant en outre à
- envoyer, au serveur maître, un message de réseau comprenant l'adresse MAC d'un second terminal connecté à un réseau sans fil régulier émis par le point d'accès pour stocker une association entre le second terminal et le réseau sans fil régulier émis par le point d'accès.

10. Procédé selon l'une quelconque des revendications précédentes, dans lequel le message de réseau comprend en outre l'un d'un BSSID, d'un SSID et d'un identificateur du réseau sans fil régulier émis par l'autre point d'accès.

11. Point d'accès permettant d'établir une connexion de données entre un terminal et un réseau de communications de données, comprenant
- un récepteur servant à recevoir, du terminal, une demande de fournisseur de service fournie dans une trame de demande de sonde comprenant une adresse MAC du terminal, dans lequel le terminal a été connecté au préalable à un réseau sans fil régulier émis par un autre point d'accès, dans lequel un message de réseau comprenant l'adresse MAC du terminal a été envoyé de l'autre point d'accès au serveur maître, et dans lequel des informations du message de réseau ont été mémorisées dans le serveur maître ;
- un dispositif d'envoi servant à envoyer, à un serveur maître, des informations de demande associées à la demande de fournisseur de service ;
- le récepteur étant en outre configuré pour recevoir, du serveur maître, des informations d'accusé de réception se rapportant à un serveur de fournisseur de service compris dans l'autre point d'accès et associé à au moins un fournisseur de service pouvant établir une connexion fonctionnelle du terminal au réseau de communications de données par le biais du point d'accès ;
- une unité de traitement étant configurée pour établir une connexion de réseau avec le serveur de fournisseur de service ;
- le récepteur étant en outre configuré pour recevoir, dudit serveur de fournisseur de service, un ensemble d'instructions ;
- l'unité de traitement étant en outre configurée pour attribuer un point d'accès virtuel conformément auxdites instructions ; et
- l'unité de traitement étant en outre configurée pour établir une connexion de données entre le terminal et le réseau de communications de données par le biais du point d'accès virtuel conformément auxdites instructions.

12. Procédé à utiliser dans un serveur maître pour établir une connexion de données entre un terminal et un réseau de communications de données, consistant à
- recevoir, d'un premier point d'accès, un message de réseau comprenant une adresse MAC du terminal connecté à un réseau sans fil régulier émis par le premier point d'accès ;
- mémoriser des informations du message de réseau ;
- recevoir, d'un second point d'accès, des informations de demande associées à une demande de fournisseur de service envoyée du terminal au second point d'accès ;
- rechercher une association entre le terminal et un serveur de fournisseur de service sur la base des informations de demande reçues ; et
- envoyer des informations d'accusé de réception se rapportant à un serveur de fournisseur de service associé à un fournisseur de service pouvant établir une connexion fonctionnelle du terminal au réseau de communications de données par le biais du second point d'accès.

13. Procédé selon la revendication 12, consistant en outre à mémoriser des informations relatives à des surcharges acceptées avec des informations de compte associées aux connexions entre des points d'accès et des serveurs de fournisseur de service.

14. Serveur maître permettant d'établir une connexion de données entre un terminal et un réseau de communications de données, comprenant
- un récepteur servant à recevoir, d'un premier point d'accès, un message de réseau comprenant une adresse MAC du terminal connecté à un réseau sans fil régulier émis par le premier point d'accès ;
- une mémoire servant à mémoriser des informations du message de réseau ;
- le récepteur étant en outre configuré pour recevoir, d'un second point d'accès, des informations de demande associées à une demande de fournisseur de service envoyée du terminal au second point d'accès ;
- une unité de processeur servant à rechercher des fournisseurs de service disponibles sur la base des informations de demande reçues ; et
- une unité d'envoi servant à envoyer des informations d'accusé de réception se rapportant aux fournisseurs de service disponibles pouvant assurer une connexion fonctionnelle du terminal au réseau de communications de données par le biais du second point d'accès.

15. Procédé, dans un système comprenant des premier et second points d'accès, un serveur maître et un serveur fournisseur de service, permettant d'établir une connexion de données entre un terminal et un réseau de communications de données, le serveur de fournisseur de service étant compris dans le premier point d'accès, le procédé consistant à
- recevoir, par le serveur maître, du premier point d'accès, un message de réseau comprenant une adresse MAC du terminal connecté à un réseau sans fil régulier émis par le premier point d'accès ;
- mémoriser, par le serveur maître, des informations du message de réseau ;
- recevoir, par le second point d'accès, du terminal, une demande de fournisseur de service ;
- envoyer, par le point d'accès, des informations de demande associées à la demande de fournisseur de service au serveur maître ;
- recevoir, par le serveur maître, les informations de demande ;
- rechercher, par le serveur maître, un serveur de fournisseur de service associé sur la base des informations de demande reçues ;
- recevoir, par le point d'accès, du serveur maître, des informations d'accusé de réception se rapportant à serveur de fournisseur de service compris dans le premier point d'accès et associé à un fournisseur de service pouvant établir une connexion fonctionnelle du terminal au réseau de communications de données par le biais du second point d'accès ;
- établir, au niveau du second point d'accès, une connexion de réseau avec le serveur de fournisseur de service ;
- recevoir, au niveau du second point d'accès, dudit serveur de fournisseur de service, un ensemble d'instructions ;
- attribuer, au niveau du second point d'accès, un point d'accès virtuel conformément audites instructions ;
- recevoir, par le second point d'accès, du terminal, des informations d'authentification se rapportant à la connexion de données établie au moyen du fournisseur de service sélectionné ;
- envoyer, par le second point d'accès, les informations d'authentification reçues au serveur de fournisseur de service ; et
- établir, au niveau du second point d'accès, une connexion de données entre le terminal et le réseau de communications de données par le biais du point d'accès virtuel conformément auxdites instructions.

16. Système conçu pour exécuter le procédé selon la revendication 15.

17. Programme informatique mémorisé sur un support lisible par ordinateur, comprenant des instructions qui, lorsqu'elles sont exécutées sur un processeur, provoquent l'exécution d'un procédé selon la revendication 1.

18. Programme informatique mémorisé sur un support lisible par ordinateur, comprenant des instructions qui, lorsqu'elles sont exécutées sur un processeur, provoquent l'exécution d'un procédé selon la revendication 12.

19. Programme informatique mémorisé sur un support lisible par ordinateur, comprenant des instructions qui, lorsqu'elles sont exécutées sur un processeur, provoquent l'exécution d'un procédé selon la revendication 15.
